# EUROPÄISCHE PATENTSCHRIFT

(11) **EP 0 415 173 B1**
(45) Veröffentlichungstag und Bekanntmachung des Hinweises auf die Patenterteilung: **23.11.1994**
(21) Anmeldenummer: 90115542.4
(22) Anmeldetag: 14.08.1990
(51) Int. Cl.: B29C 35/02, B29C 47/04, B29C 47/88, H01B 7/10

(54) **Verfahren zum Vulkanisieren von koextrudierten Hohlkammerprofilen aus elastomeren Werkstoffen**
Method for the vulcanisation of hollow coextruded elastomeric profiles
Procédé pour la vulcanisation des profils creux élastomèriques coextrudés

(30) Priorität: 29.08.1989 DE 3928482
(43) Veröffentlichungstag der Anmeldung: 06.03.1991
(73) Patentinhaber: REHAU AG + Co, 95111 Rehau (DE)
(72) Erfinder:

(56) Entgegenhaltungen:
- DE-A- 3 304 400
- DE-U- 8 913 314
- FR-A- 1 071 182
- US-A- 4 069 286

## Beschreibung

Die Erfindung betrifft ein Verfahren zum Vulkanisieren von koextrudierten Hohlkammerprofilen aus elastomeren Werkstoffen nach dem Oberbegriff des Patentanspruch 1. Dabei wird auf die inneren Oberflächen eines Hohlkammerprofils aus isolierendem Werkstoff eine mit elektrisch leitenden Füllstoffen versehene Beschichtung derart aufgebracht, daß wenigstens zwei Teilbereiche der Beschichtung durch längsverlaufende Oberflächenbereiche des isolierenden Hohlkammerprofils voneinander getrennt sind, und wobei das Hohlkammerprofil und die partielle Innenwandbeschichtung im Wege der drucklosen Heißvulkanisation unlösbar miteinander verbunden werden. Derartige Profile werden als sogenannte Schlauchschalter in technischen Bereichen eingesetzt. Sie bestehen aus einer Kombination von isolierendem mit leitfähigem plastischen Material.

So ist aus der DE-AS 2 300 222 ein Verfahren zum kontinuierlichen Herstellen von elastischen elektrischen Schlauchschaltern beschrieben, bei dem der Schlauchmantel aus einer Gummihaftmischung besteht. Bei diesem Verfahren werden elektrisch leitende Bänder auf einen später entfernbaren Kern aufgebracht. Dieser Aufbau wird dann mit dem Schlauchmantel umspritzt, wobei die Kontaktbänder fest in den Schlauchmantel eingelagert werden. Danach erfolgt die Vulkanisierung des Schlauchmantels und dann das Herausziehen des Tragstreifens aus dem Schlauchmantel, wobei die Kontaktbänder in ihrem Sitz am inneren Umfang des Schlauchmantels belassen werden. Dieses Verfahren ist aufwendig und arbeitsintensiv und daher für den großtechnischen Gebrauch nicht einsetzbar.

Aus dem DE-GM 82 04 993.9 ist ein weiterer Schlauchschalter bekannt, der als Sicherheitseinrichtung an motorisch angetriebenen Kraftfahrzeugfenstern eingesetzt ist. Die Leiterstreifen liegen in einem Kanal der Gummidichtung getrennt voneinander. Bei einer Verformung der Gummidichtung und Kontaktierung der Leiterstreifen wertet die Steuerelektronik diesen Kurzschluß aus und schaltet den Motor ab oder um. Damit ist ein gefährliches Einklemmen vermieden. Auch diese Sicherheitseinrichtung ist aufwendig in der Herstellung und kann nicht kontinuierlich gefertigt werden, da die Kontaktleiste mit den Leiterstreifen in den Kanal der Gummidichtung diskontinuierlich eingezogen werden muß.

Ein vergleichbarer Einklemmschutz für mit einem elektrisch betätigbaren Fensterheber ausgerüstete Fahrzeuge ist in der DE-OS 34 24 581 beschrieben.

Aus der DE-PS 33 04 400 ergibt sich eine Sicherheitskontaktschiene für kraftbetätigte Anlagen, bei der ein Gummihohlprofil als Einkammer-Profil ausgebildet ist und Innenseiten des Gummihohlprofils selbst als elektrisch leitende Kontaktflächen dienen. Die elektrisch leitenden Kontaktflächen können durch Beimischungen von leitfähigen Stoffen, z.B. Graphit, oder die Einlage dünner Metallnetze in die Gummioberfläche gebildet werden. Die beiden elektrisch getrennten Kontaktflächen sind an dem dem Kabelanschluß abgewandten Ende über eine Sperrdiode miteinander verbunden. Bei gegenseitiger Berührung der Kontaktflächen wird die Sperrdiode überbrückt und die Anlage abgeschaltet bzw. Kommando zur Aufwärtsbewegung der Anlage erteilt.

Die elektrische leitenden Kontaktflächen dieses Standes der Technik können durch Beimischung von leitfähigen Stoffen erzeugt werden.

Die Kontaktflächen bilden mit dem Hohlprofil des Schlauchschalters also eine Einheit. Auch kann das bekannte Profil als Endlosprofil hergestellt werden. Der Nachteil dieses bekannten Schlauchschalters ist darin zu sehen, daß er als Gummihohlprofil ausgelegt ist. Hier werden im allgemeinen organische Kautschuke, beispielsweise EPDM-Kautschuke verwendet. Diese Kautschuke zeigen ein schlechtes Rückstellvermögen, was sich für die spezielle Anwendung nachteilig auswirkt. Auch sind diese Kautschuke, gemessen an anderen elastomeren Materialien wie Silikon, als relativ harte Materialien einzustufen, so daß die Auslösekräfte im Vergleich zu entsprechenden Profilen aus Silikonkautschuk höher sind.

Bei leitfähigen Silikonelastomeren ist es bekannt, daß die Beimischung von leitfähigen Stoffen wie Ruß und Graphit, die zur Erzeugung der elektrischen Leitfähigkeit in die Silikonkautschuk-Mischungen eingearbeitet werden müssen, die bei druckloser Vulkanisation übliche peroxidische Vernetzungsreaktion stören. Aus diesem Grunde setzt man für die Vulkanisation rußgefüllter, leitfähiger Silikonkautschukmischungen bei druckloser Vulkanisation polyadditionsvernetzende Mischungen ein, die im allgemeinen mit einer Silan-Komponente und einem Platinkatalysator vernetzt werden. Hohe Konzentration leitfähiger Stoffe stören jedoch die Vulkanisation der peroxidisch vernetzten Materialien nicht nur im Querschnittsbereich der Profile aus diesem Material, sondern bei der Kombination mit einem isolierenden Material, z.B. durch Koextrusion verschiedener Materialschichten, auch im Bereich der Grenzflächen dieser Materialschichten, so daß hier Haftungsprobleme auftreten. So verwendet man bei der Koextrusion von rußgefüllten Silikonen mit isolierenden Silikonen aus diesem Grunde auch für die isolierende Komponente entsprechende Additionsmaterialien.

Die unterschiedliche Wärmeleitfähigkeit der genannten Materialien wirkt sich bei der Extrusion von Kompaktprofilen oder bei der Extrusion von Hohlkammerprofilen, die im Außenbereich abwechselnd aus leitfähigen und isolierenden Segmenten bestehen, nicht aus. Sie zeigt jedoch gravierende Auswirkungen, wenn in ein Hohlkammerprofil aus isolierendem Material Segmente aus leitfähigem Material eingebettet werden. Dabei wird die Vernetzung der Additionsmaterialien durch die chemische Reaktion Nr. 1 ausgelöst. 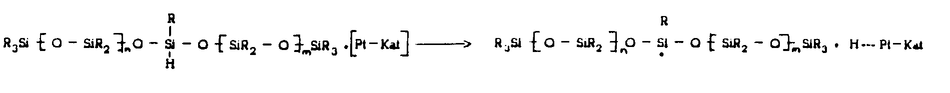
Diese Reaktion startet mit einer praxisgerechten Geschwindigkeit bei Temperaturen oberhalb von ca. 100° C. Das in der chemischen Reaktion Nr. 1 beschriebene, instabile Zwischenprodukt reagiert entsprechend der Reaktionsgleichungen 2 oder 3 zu den dort angegebenen Endprodukten. 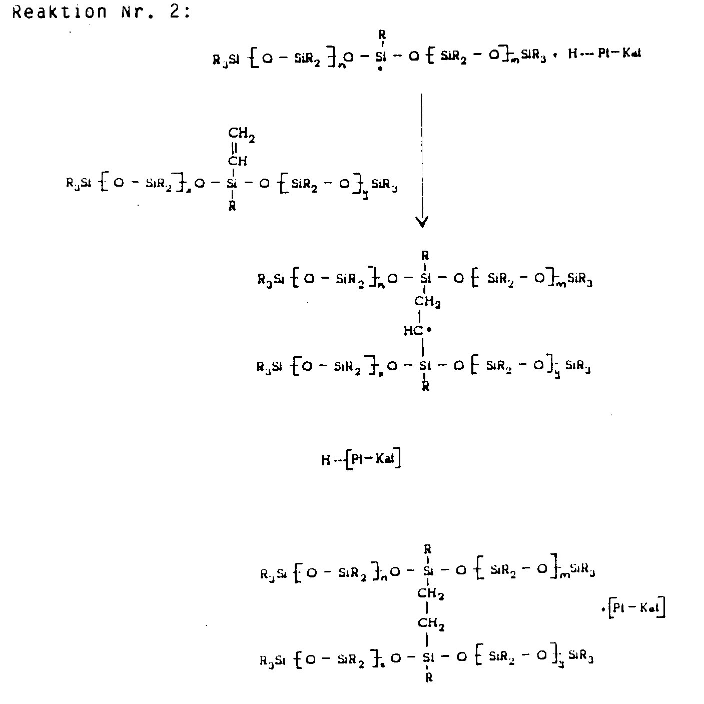 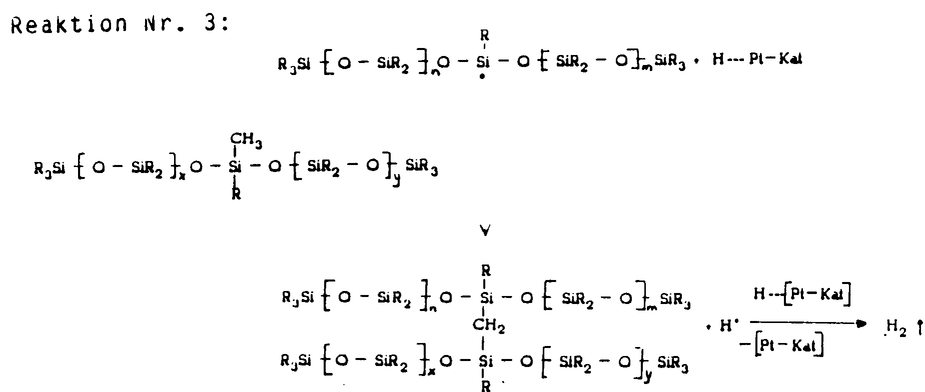
Bei niedrigeren Temperaturen überwiegt die Reaktion Nr.3, während bei hohen Temperaturen die Reaktion Nr. 2 sehr viel schneller abläuft, so daß die Reaktion Nr. 3 nicht zum Tragen kommt.

Dieser Effekt wirkt sich bei der Herstellung der genannten Hohlkammerprofile mit isolierender Außenhaut und innenliegenden leitfähigen Elementen nachteilig aus, da nach dem Stand der Technik die Beheizung der Profile durch den schlecht wärmeleitfähigen, isolierenden Mantel des Isolierprofils erfolgt.

Danach wird die im Innenbereich der Hohlkammer befindliche Luftsäule, die entweder durch das Ansaugen von Außenluft oder über zwangsmäßig zugeführte Stützluft entsteht, erst dann aufgeheizt, wenn die von außen zugeführte Wärme die isolierende Schicht durcharungen hat. Diese Luftsäule ist daher während der Extrusion des Profils stets der kälteste Teil des Hohlkammerprofiles. Durch die gegenüber der isolierenden Silikonschicht verbesserte wärmeleitfähigkeit der auf der Innenseite des Hohlkammerprofils eingebrachten, leitfähigen Segmente wird an der Grenzfläche zwischen leitfähigen Segmenten und isolierender Hülle die Wärme besonders schnell in Richtung auf die Stützluft abgeführt, so daß sich die Grenzfläche zwischen isolierendem Material und leitfähigem Material bei äußerer Wärmezufuhr durch die Wärmeabfuhr in Richtung Hohlkammer am langsamsten erwärmt.

Trotz dieser Erkenntnisse ist man bei der Vulkanisation von Profilen oder Hohlprofilen aus Silikonkautschuk bemüht, mit einer möglichst niedrigen Temperatur zu arbeiten, um eine thermische Schädigung der Profilaußenseiten zu verhindern. So werden in der ersten Aufheizzone Ofentemperaturen zwischen 400° und 500° C erreicht. Bei Hohlkammerprofilen der oben beschriebenen Art zählen unter diesen Bedingungen im Bereich der Grenzfläche zwischen isolierendem Außenmantel und leitfähiger Innenschicht je nach der Geometrie des Extrudates Temperaturen im Bereich von ca. 120 bis ca. 160° C auf. Unter diesen Temperaturen läuft der beschriebene Reaktionsweg der chemischen vernetzung bevorzugt nach Reaktion Nr. 3 ab, so daß sich in der Grenzfläche Wasserstoffblasen bilden, die zu einer verminderten Haftung zwischen der leitfähigen Innenschicht und dem isolierenden Mantel sowie zu optischen und funktionalen Mängeln führen.

Hier setzt die Erfindung ein, die es sich zur Aufgabe gestellt hat, in möglichst kurzer Zeit in der Grenzfläche zwischen der leitfähigen Innenschicht und dem isolierenden Mantel eine yulkanisationstemperatur von ca. 200° C zu erzeugen, bei der die Vernetzungsreaktion nach den Reaktionsgleichungen Nr. 2 abläuft, wodurch die Blasenbildung in der Grenzfläche unterdrückt wird. Erfindungsgemäß wird dazu vorgeschlagen, daß das mehrschichtige Hohlkammerprofil nach dem verlassen des Düsenmundstückes einer ersten, kurzzeitigen Schockvulkanisation bei Temperaturen um 900°C ausgesetzt wird, und daß sich an diese Schockvulkanisation nach einer Abkühlphase ein weiterer Aufheizvorgang anschließt, bei dem das anvulkanisiserte Profil der Restvulkanisation zugeführt wird.

Vorteilhaft wird das Hohlkammerprofil nach dem Verlassen des Extrusionswerkzeuges für ca. 10 sec. durch einen senkrecht angeordneten Schockkanal mit einer Temperatur von ca. 900° C geführt. Mit dieser außerordentlich hohen Schocktemperatur wird die Blasenbildung in der Phasengrenzfläche zwischen isolierendem und leitfähigem Kautschuk unterbunden. Wesentlich für die Erfindung ist, daß das Hohlprofil während der Einwirkung der außerordentlich hohen Schocktemperatur von ca. 900°C in einer senkrechten Anordnung des Vulkanisationskanales ausgesetzt wird, weil in diesem senkrechten Vulkanisationskanal eine außerordentlich hohe Luftströmung entsteht, die eine lokale Überhitzung des Profils mit folgendem Verbrennen verhindert.

Es entsteht in diesem senkrechten Vulkanisationskanal eine turbulente Luftströmung, die zusätzlich zu einem verbesserten Wärmeübergang auf das Hohlprofil führt. Der Wärmeübergang erfolgt nämlich sowohl durch Strahlungswärme als auch durch die turbulente Konvektionsströmung.

Dieser Vorteil, der zur Verhinderung der Blasenbildung in den Grenzschichten zwischen der leitfähigen Innenschicht und dem isolierenden Mantel gesehen wird, kann in dieser Form bei einem entsprechend aufgeheizten waagerechten Vulkanisationskanal nicht erzielt werden. Das Hohlprofil aus Silikonkautschuk benötigt im letzteren Fall eine Auflagefläche, in deren Bereich die Durchwärmung der Profilwandung zwangsläufig langsamer vonstatten gehen muß, so daß sich in diesem Bereich die schädliche Blasenbildung an der Grenzschicht wieder einstellen wird.

Erfindungsgemäß erfolgt die Einwirkung der hohen Schocktemperatur von ca. 900° C in dem senkrecht angeordneten Vulkanisationskanal für die kurze Einwirkungsdauer von ca. 10 Sec.

Um innerhalb des Profilquerschnitts einen entsprechenden Temperaturausgleich zu erreichen, folgt dann für ca. 20 Sec. eine Abkühlphase, bei der beispielsweise das Hohlprofil in der Umgebungsatmosphäre ohne zusätzliche äußere Beheizung geführt wird. Im Anschluß an diese Abkühlphase wird das Hohlprofil dann in einem weiteren Heizkanal ca. 60 Sec. einer Vulkanisationstemperatur von etwa 320° C unterworfen, um so den Zustand der Endvulkanisation zu erreichen.

Mit dem erfindungsgemäßen Verfahren lassen sich durchvulkanisierte Hohlprofile aus wenigstens zwei Schichten herstellen, bei denen am inneren Umfang der äußeren Isolierschicht Teilbereiche längsverlaufend im Wege des Koextrusionsverfahrens mit einer elektrisch leitfähigen Beschichtung versehen sind, wobei es bei der Vulkanisation nicht zu den schädlichen Blasenbildungen im Grenzschichtbereich zwischen der äußeren Isolierschicht und der inneren, elektrisch leitfähig eingestellten Beschichtung kommt.

## Patentansprüche

1. Verfahren zur Vulkanisation von koextrudierten Hohlkammerprofilen aus Silikonkautschuken, wobei in eine Hohlkammer aus isolierendem Werkstoff wenigstens eine mit elektrisch leitenden Füllstoffen versetzte Profilschicht extrudiert wird und beide Schichten im Wege der drucklosen Heißvulkanisation unlösbar miteinander verbunden werden, dadurch gekennzeichnet, daß das mehrschichtige Hohlkammerprofil nach dem Verlassen des Düsenmundstückes einer ersten, kurzzeitigen Schockvulkanisation bei Temperaturen um 900° C ausgesetzt wird, und daß sich an diese Schockvulkanisation nach einer Abkühlphase ein weiterer Aufheizvorgang anschließt, bei dem das anvulkanisierte Profil der Restvulkanisation zugeführt wird.

2. Verfahren nach Anspruch 1, dadurch gekennzeichnet, daß die Schockvulkanisation bei einer Verweilzeit von ca. 10 Sekunden durchgeführt wird.

3. Verfahren nach Ansprüchen 1 und 2, dadurch gekennzeichnet, daß die Schockvulkanisation bei senkrecht verlaufendem Hohlkammerprofil erfolgt und damit die Temperatur von allen Seiten gleichmäßig an den äußeren Umfang des Hohlkammerprofils herangeführt wird.

4. Verfahren nach Anspruch 1, dadurch gekennzeichnet, daß der Schockvulkanisation eine Abkühlphase folgt, während der die Temperatur innerhalb des Profilquerschnitts gleichmäßig verteilt wird.

5. Verfahren nach Anspruch 1, dadurch gekennzeichnet, daß das Hohlkammerprofil nach Durchlaufen der Abkühlphase zur Restvulkanisation erneut auf eine Vulkanisationstemperatur von ca. 320° C gebracht wird.

## Claims

1. Method for vulcanising coextruded hollow profiles of silicone rubbers in which at least one profile layer mixed with electrically conductive fillers is extruded into a chamber of insulating material and both layers are undetachably united by way of pressureless high-temperature vulcanising, characterised by the fact that after leaving the outer die ring the multi-layer hollow profile briefly undergoes initial sudden vulcanising at temperatures of around 900 °C and that after a cooling period this sudden vulcanisation is followed by a further heating phase in which the partially vulcanised profile completes the vulcanisation process.

2. Method as described in claim 1, characterised by the fact that the sudden vulcanisation process takes place with a dwell time of approx. 10 seconds.

3. Method as described in claims 1 and 2, characterised by the fact that the sudden vulcanisation process takes place with the hollow profile running vertically, thus evenly exposing the outer circumference of the hollow profile to heat from all sides.

4. Method as described in claim 1, characterised by the fact that sudden vulcanisation process takes place after a cooling phase during which the temperature is evenly distributed throughout the profile cross section.

5. Method as described in claim 1 characterised by the fact that after the cooling phase has elapsed the hollow profile is returned to a vulcanising temperature of approx. 320 °C in order to complete the vulcanisation process.

## Revendications

1. Procédé de vulcanisation de profilés à chambre creuse coextrudés en caoutchoucs de silicone, consistant à extruder dans une chambre creuse en matériau isolant au moins une couche de profilé additionnée de matières de remplissage électroconductrices et à lier les deux couches entre elles de manière inséparable par vulcanisation à chaud sans pression, caractérisé par le fait qu'après avoir guitté le nez de buse, le profilé à chambre creuse multicouches subit une première brève vulcanisation brutale à des températures de l'ordre de 900 °C et qu'après une phase de refroidissement, cette vulcanisation est suivie d'une nouvelle phase de chauffage dans laquelle le profilé ayant subi une première vulcanisation est dirigé vers la vulcanisation finale.

2. Procédé selon la revendication 1, caractérisé par le fait que la vulcanisation brutale est réalisée avec un temps de séjour d'environ 10 secondes.

3. Procédé selon les revendications 1 et 2, caractérisé par le fait que dans la vulcanisation brutale, le profilé à chambre creuse se déplace verticalement et que la température est ainsi transmise régulièrement de tous côtés sur la périphérie du profilé à chambre creuse.

4. Procédé selon la revendication 1, caractérisé par le fait que la vulcanisation brutale est suivie d'une phase de refroidissement dans laquelle la température est répartie régulièrement à l'intérieur de la section du profilé.

5. Procédé selon la revendication 1, caractérisé par le fait qu'après avoir traversé la phase de refroidissement, le profilé à chambre creuse est réchauffé à nouveau à une température de vulcanisation d'environ 320 °C pour la vulcanisation finale.
